# EUROPEAN PATENT APPLICATION

(11) **EP 3 962 024 A1**
(43) Date of publication of application: **02.03.2022**
(21) Application number: 18942182.9
(22) Date of filing: 04.12.2018
(51) Int. Cl.: H04L 29/08

(54) **RECORD TRANSMITTING METHOD AND DEVICE**

(71) Applicant: Blockchain Alliance HK Limited, Hong Kong (HK)
(72) Inventor: PENG, Yihao, Beijing 100192 (CN)
(74) Representative: Pfenning, Meinig & Partner mbB
(86) International application number: PCT/CN2018/119222
(87) International publication number: WO 2020/113435

(57) **Abstract**

The present application relates to a method and a device for transmitting record. The method comprises: selecting a target record from a current record according to a difference between the current record and a corresponding record in a historical record; transmitting the target record to a receiving end. The target record to be transmitted is selected according to the difference between the current record and the corresponding record in the historical record, instead of by directly transmitting a complete current record to the receiving end, such that the flexibility of transmission can be improved.

## Description

### TECHNICAL FIELD

The present application relates to the field of data transmission, for example, to a method and a device for transmitting record.

### BACKGROUND

Record is a common form of data, which is widely used in the Internet field.

The contents of the record often change over time, and therefore, the transmitting end (information source) updates the historical records stored on the receiving end (information sink).

In the related art, the transmitting end typically transmits the updated current record to the receiving end completely, which is a less flexible way to transmit record.

### SUMMARY

An embodiment of the present disclosure provides a method for transmitting record, comprising:
selecting a target record from a current record according to a difference between the current record and a corresponding record in a historical record;
transmitting the target record to a receiving end.

Selecting a target record to be transmitted according to a difference between the current record and a corresponding record in a historical record, instead of directly transmitting a complete current record to the receiving end, can improve the flexibility of transmission.

In some implementation manners, the selecting a target record from a current record according to a difference between the current record and a corresponding record in a historical record comprises:
selecting the target record from the current record according to the difference between the current record and the corresponding record in the historical record such that an amount of the target record is less than or equal to a first preset threshold.

Setting a upper limit of the amount of target record, such that the data amount of that needs to be transmitted at the receiving and transmitting ends is basically stable (that is, the data amount of is basically maintained below the first preset threshold) regardless of whether the amount of records in the current record is more or less.

In some implementation manners, the selecting a target record from a current record according to a difference between the current record and a corresponding record in a historical record comprises:
selecting the target record from the current record according to the difference between the current record and the corresponding record in the historical record such that a data amount of the target record is less than or equal to a second preset threshold.

Setting a upper limit of the data amount of target record, such that the data amount of that needs to be transmitted at the receiving and transmitting ends is basically stable (that is, the data amount of is basically maintained below the second preset threshold) regardless of whether the data amount of records in the current record is more or less.

In some implementation manners, the target record comprises a first record in which a specific data item is deleted, wherein the first record has a same value as the specific data item of the corresponding record in the historical record.

Deleting the specific data item that has not been updated in the target record, such that the data amount of to be transmitted can be reduced or the target record can be capable of holding more information.

In some implementation manners, the target record is a partial record in the current record, and the current record also comprises a remaining record except for the partial record, and a minimum value of a difference between the partial record and the corresponding record in the historical record is greater than or equal to a maximum value of a difference between the remaining record and the corresponding record in the historical record.

Compared with the remaining record, the target record is quite different from the corresponding record in the historical record. Therefore, the target record may be more compelling to the user. Transmitting the target record to the receiving end without transmitting the remaining record can reduce the data amount of to be transmitted and may not affect transmission quality.

In some implementation manners, the difference between the current record and the corresponding record in the historical record is determined based on a difference between target data items of the current record and the corresponding record in the historical record.

In some implementation manners, the target data item comprises a plurality of data items, and the difference between the current record and the corresponding record in the historical record is a weighted sum of differences between the plurality of data items of the current record and the corresponding record in the historical record.

In some implementation manners, the target record comprises a newly added record and/or a deleted record relative to the historical record.

In some implementation manners, the deleted record in the target record only comprises a main field.

Omitting the other contents other than the main field of the deleted record, such that the data amount of to be transmitted can be reduced or the target record can be capable of holding more information.

In some implementation manners, the transmitting the target record to a receiving end comprises: compressing the target record to obtain compressed data; transmitting the compressed data to the receiving end.

In some implementation manners, the method further comprising:
merging a plurality of original time records into one target time record, wherein different object identifiers in the plurality of original time records correspond to different times, and each object identifier in the target time record corresponds to a same time;
transmitting the target time record to the receiving end.

Merging a plurality of original time records correspond to different times into one target time record corresponds to a same time; such that the data amount of the time record can be reduced.

In some implementation manners, the merging a plurality of original time records into one target time record comprises:
adjusting a time accuracy of the plurality of original time records to obtain a plurality of intermediate time records corresponding to a same time, the time accuracy of the original time record is a first time accuracy and a time accuracy of the intermediate time record is a second time accuracy, and wherein the second time accuracy is less than the first time accuracy; merging the plurality of intermediate time records into the target time record.

Adjusting a time accuracy of the original time records, such that those time records that originally could not be merged can be merged so that the compression performance of the time records can be greatly improved under the condition of losing some time accuracy.

In some implementation manners, the adjusting a time accuracy of the plurality of original time records to obtain a plurality of intermediate time records corresponding to a same time comprises: rounding off the time in the plurality of original time records according to the second time accuracy to obtain the plurality of intermediate time records.

In some implementation manners, a time length corresponding to the second time accuracy is greater than an update cycle of the original time record.

When the time length corresponding to the second time accuracy is greater than the update cycle of the original time record, the intermediate time record obtained after the accuracy adjustment will either remain unchanged from the time records before updating or be adjusted to the same time, such that most or even all of the intermediate time records can be merged into one target time record, greatly reducing the data amount of the time records.

In some implementation manners, the plurality of original time records are time records which are updated relative to the historical time record, and an object identifier in the target time record is an object identifier in a time record which is not updated relative to the historical time record, wherein an amount of the object identifiers in the time records which are updated relative to the historical time record is greater than an amount of the object identifier in the time records which are not updated relative to the historical time record.

Since the amount of the object identifiers in the time records that are updated relative to the historical time record is greater than the amount of object identifiers in the time records that are not updated relative to the historical time record, and in the target time records, recording the object identifiers in the time records that are not updated relative to the historical time record can not only calculate the time records that are updated relative to the historical time record (equivalent to recording the time records that are updated relative to the historical time record), but also reduce the data amount of the time records.

An embodiment of the present disclosure further provides a device for transmitting record, comprising:
a selection module configured to select a target record from a current record according to a difference between the current record and a corresponding record in a historical record;
a first transmission module configured to transmit the target record to a receiving end.

In some implementation manners, the selection module is configured to select the target record from the current record according to the difference between the current record and the corresponding record in the historical record such that an amount of the target record is less than or equal to a first preset threshold.

In some implementation manners, the selection module is configured to select the target record from the current record according to the difference between the current record and the corresponding record in the historical record such that a data amount of the target record is less than or equal to a second preset threshold.

In some implementation manners, the target record comprises a first record in which a specific data item is deleted, wherein the first record has a same value as the specific data item of the corresponding record in the historical record.

In some implementation manners, the target record is a partial record in the current record, and the current record also comprises a remaining record except for the partial record, and a minimum value of difference between the partial record and the corresponding record in the historical record is greater than or equal to a maximum value of a difference between the remaining record and the corresponding record in the historical record.

In some implementation manners, the difference between the current record and the corresponding record in the historical record is determined based on a difference between target data items of the current record and the corresponding record in the historical record.

In some implementation manners, the target data item comprises a plurality of data items, and the difference between the current record and the corresponding record in the historical record is a weighted sum of differences between the plurality of data items of the current record and the corresponding record in the historical record.

In some implementation manners, the target record comprises a newly added record and/or a deleted record relative to the historical record.

In some implementation manners, the deleted record in the target record only comprises a main field.

In some implementation manners, the first transmission module is configured to compress the target record to obtain a compressed data and transmit the compressed data to the receiving end.

In some implementation manners, the device further comprising:
a processing module configured to merge a plurality of original time records into one target time record, wherein different object identifiers in the plurality of original time records correspond to different times, and each object identifier in the target time record corresponds to a same time; a second transmission module configured to transmit the target time record to a receiving end.

In some implementation manners, the processing module comprises:
an adjusting module configured to adjust a time accuracy of the plurality of original time records to obtain a plurality of intermediate time records corresponding to a same time, the time accuracy of the original time record is a first time accuracy and a time accuracy of the intermediate time record is a second time accuracy, and wherein the second time accuracy is less than the first time accuracy; a merging module configured to merge the plurality of intermediate time records into the target time record.

In some implementation manners, the adjusting module is configured to round off the time in the plurality of original time records according to the second time accuracy to obtain the plurality of intermediate time records.

In some implementation manners, a time length corresponding to the second time accuracy is greater than an update cycle of the original time record.

In some implementation manners, the plurality of original time records are time records which are updated relative to the historical time record, and an object identifier in the target time record is an object identifier in a time record which is not updated relative to the historical time record, wherein an amount of the object identifiers in the time records which are updated relative to the historical time record is greater than an amount of the object identifier in the time record which are not updated relative to the historical time record.

An embodiment of the present disclosure further provides a computer (such as a server or a terminal), comprising an above-mentioned device for transmitting record.

An embodiment of the present disclosure further provides an electronic equipment, comprising: at least one processor; and a memory in communication connection with the at least one processor; wherein the memory have instructions executable by the at least one processor stored therein, and when being executed by the at least one processor, the instructions cause the at least one processor to execute the above-mentioned method for transmitting record.

An embodiment of the present disclosure further provides a computer-readable storage medium with computer-executable instructions stored therein, wherein the computer-executable instructions are arranged to execute the above-mentioned method for transmitting record.

An embodiment of the present disclosure further provides a computer program product, comprising a computer program stored in a computer-readable storage medium, the computer program comprising program instructions, the program instructions, when executed by a computer, causing the computer to execute the above-mentioned method for transmitting record.

### BRIEF DESCRIPTION OF DRAWINGS

One or more embodiment are exemplarily described through accompanying drawings corresponding to the one or more embodiments. These exemplary descriptions do not constitute any limitation on the embodiment. Elements having identical reference numerals in the accompanying drawings are represented as similar elements. The pictures in the accompanying drawings do not constitute any proportional limitation, where:
Fig.1 is an example diagram of an application scenario provided by an embodiment of the disclosure;
Fig.2 is another example diagram of an application scenario provided by an embodiment of the disclosure;
Fig.3 is a schematic flowchart of a method for transmitting record provided by an embodiment of the present disclosure;
Fig.4 is a schematic flowchart of a method for transmitting time record provided by an embodiment of the present disclosure;
Fig.5 is a schematic flowchart of a method for transmitting time record provided by another embodiment of the present disclosure;
Fig.6 is a schematic flowchart of a method for transmitting time record provided by another additional embodiment of the present disclosure;
Fig.7 is a schematic diagram of the processing flow of the transmitting end in the method for transmitting time record provided by another additional embodiment of the present disclosure;
Fig.8 is a schematic diagram of the processing flow of the receiving end corresponding to FIG.7;
Fig.9 is a schematic structural diagram of a device for transmitting record provided by an embodiment of the disclosure;
Fig.10 is a schematic structural diagram of an electronic device provided by an embodiment of the disclosure.

### DESCRIPTION OF EMBODIMENTS

In order to enable a more thorough understanding on the features and technical content of the embodiment of the present disclosure, the implementation of the embodiment of the present disclosure will be described below in detail with reference to accompanying drawings. The accompanying drawings are only for reference and explanation purposes, and are not used to limit the embodiment of the present disclosure. In the following technical description, for the convenience of explanation, a sufficient understanding of the disclosed embodiment is provided through various details. However, one or more embodiment can still be implemented without these details. In other cases, in order to simplify the drawings, well-known structures and apparatuses may be shown in a simplified manner.

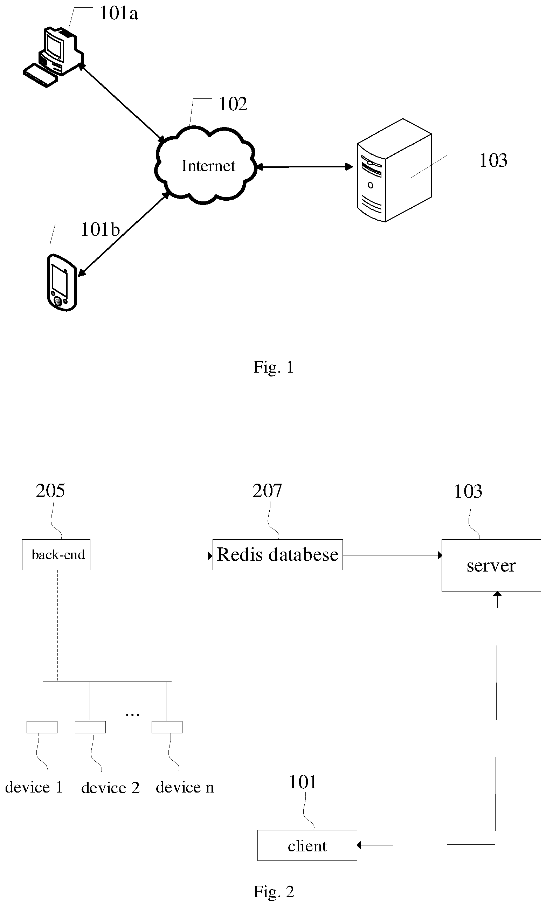

An application scenario of the embodiment of the present disclosure will be illustrated below in conjunction with Fig.1.

Fig.1 shows a network system. The network system includes a client 101 and a server 103. The client 101 and the server 103 can be connected via wired or wireless network 102.

The embodiment of the present disclosure does not restrict the types of the client 101 and the server 103.For example, the client 101 may be a fixed terminal 101a or a mobile terminal 101b. In some embodiments, the client 101 may also refer to software running on the terminal 101, such as a browser, a web page, or an APP running on the terminal 101, which is uniformly referred to the client in the embodiment of the present disclosure for ease of description, regardless of the implementation. The embodiment of the present disclosure also does not restrict the type of server 103, which can be either an application server or a storage server.

The client 101 and the server 103 can transmit data via various network protocols, such as Hypertext Transfer Protocol (HTTP) or Web-socket protocol.

The HTTP protocol is a network protocol that supports one-way communication. The server 103 transmits data to the client as requested by the client.

The Web-socket protocol is a network protocol that supports two-way communication. Based on the Web-socket protocol, the server 103 can transmit data to the client as requested by the client, or can actively transmit data (or push messages) to the client 101.

The process of generating and transmitting record will be illustrated below in conjunction with Fig.2.

As shown in Fig.2, the back-end (or data source) 205 can obtain the operating status information (such as the CPU occupation rate and memory occupation rate of the device) of the monitored device (device 1-device n in Fig.2). In addition, the back-end 205 can write the operating status information of each device into a Redis database 207 at a specific frequency (for example, 15 seconds/time or 40 seconds/time).The Redis database 207 can record the operating status information of the device in the form of a device list. The Redis database 207 is just an example, and the Redis database 207 may also be other types of databases, such as a Memcached storage system, a No-sol database, etc. When the device list in the Redis database is updated, a message can be pushed to the subscriber of the Redis database (such as the server 103) to notify the subscriber that the information in the Redis database has been updated.

The server 103 may establish a Web-socket service for monitoring requests from the client 101. When the client 101 is connected to the server 103, the server 103 can subscribe to the Redis database for the operating status information of the device 1-device n to obtain a device list in which the operating status information of each device is recorded. Then, the server 103 may transmit the device list to the client 101. For example, the server 103 may firstly transmit the initial device list to the client 101, and this process may be referred to as a first transmission. Whenever the device list is updated, the server 103 may transmit the updated device list to the client 101, and this process may be referred to as a second transmission or an updated transmission. The second transmission process can be one time or a plurality of times. Regardless of the first transmission or the second transmission the server 103 can transmit the device list as requested by the client 101 or can actively push the device list to the client 101.

The client 101 (in this embodiment, if the server 103 communicates with the client based on the Web-socket protocol, the client may also be referred to as a socket client or a Web-socket app) can display the device list on the page of the client 101. In some embodiment, the client 101 may also perform operations such as searching for information in the device list displayed on the page, or sorting the device list.

Generally speaking, each row (or each column) of the list can be called a record. Each column (or each row) of the list can be called a field. Each field in a record can be called a data item. The list usually has a main field, which is used to distinguish the different records in the list. The main field can be a field in the list, or a combination of a plurality of fields in the list. Records can also exist relatively independently in other forms of data sets, and are not limited to lists. The embodiment of the present disclosure mainly take lists as examples for description.

Table 1 is an example of the device list of the device operation status monitoring system shown in Fig.2:

**Table 1**

| Device numbe r | CPU occupation rate | Memory occupation rate | Device temperatur e | Submission time |
|---|---|---|---|---|
| 1568 | 30% | 0.5GB | 40°C | 2018-05-10 11:21:42 |
| 1329 | 70% | 1GB | 60°C | 2018-05-10 11:22:01 |
| 3421 | 50% | 0.7GB | 50°C | 2018-05-10 11:20:01 |
| 4560 | 40% | 0.6GB | 45°C | 2018-05-10 11:20:23 |

Each row in Table 1 represents a record. The device number is the main field, used to distinguish the records of different devices. CPU occupation rate memory occupation rate, etc. are all data items. The content of the record can be depended on the application and is not limited to the information related to the recording device. For example, the content of the record can be stock information or remaining ticket information.

In the related art, the transmitting end usually completely transmits the updated current record to the receiving end such that the receiving end can update its stored historical record. This method of transferring record always transmits the complete current record to the receiving end without any choice and the flexibility is poor.

In the actual network transmission process, regardless of whether the manumitting end and the receiving end use broadband Internet or mobile Internet, the channel between the two ends is always subject to various restrictions, such as channel bandwidth restrictions or data flow restrictions. Uncontrolled transmission of large data amount of will cause long transmission delays and even lead to transmission failure. Therefore, it is very important to selectively transmit the current record.

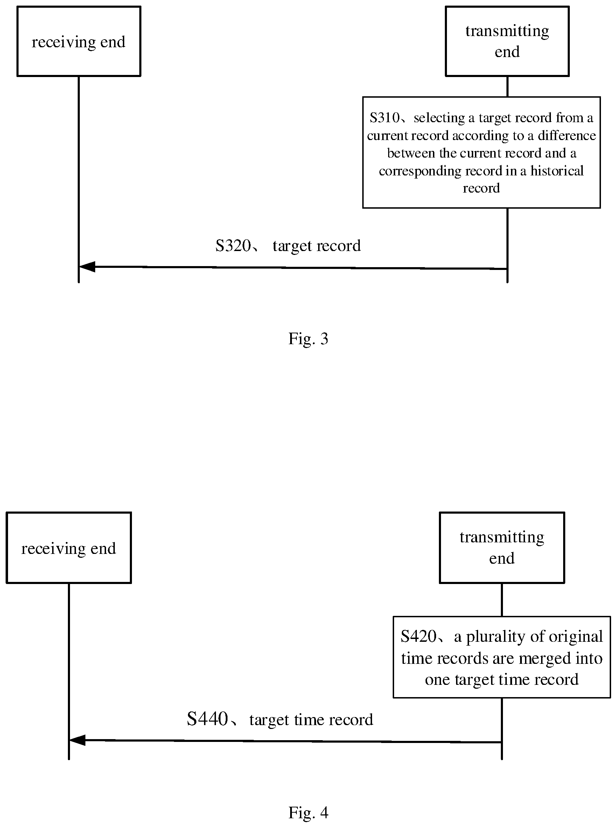

One phenomenon that helps to select the target record to be transmitted from the current record is that the amount of information a person can process in a limited time is often limited. As a result, they often only focus on content that is worthy of attention. For example, for the device operating status monitoring system described in Fig.2, the user might be concerned about the content of the device list that changes dramatically (or varies greatly). For other scenarios, the user might be concerned about the content in the list that changes gently (or varies slightly). A possible embodiment that can improve the flexibility of the receiving and transmitting ends is given below in conjunction with FIG.3.

FIG.3 is a schematic flowchart of a method for transmitting record provided by an embodiment of the present disclosure. The transmitting end and the receiving end in FIG.3 can be any transmitting devices and receiving devices that have record transmission requirements. For example, the transmitting end may be the above-mentioned server 103, and the receiving end may be the above-mentioned client 101.

In step S310, selecting a target record from a current record according to a difference between the current record and a corresponding record in a historical record;

In step S320, transmitting the target record to a receiving end.

Selecting a target record to be transmitted according to a difference between the current record and a corresponding record in a historical record, instead of directly transmitting a complete current record to the receiving end, can improve the flexibility of transmission. Of course, in the embodiment of the present disclosure, after the difference between the current record and the corresponding record in the historical record is compared, it is considered that the current record needs to be transmitted to the receiving end, or the complete current record may be transmitted to the receiving end.

The target record can comprise partial or all of the records in the current record. For example, the target record can comprise records with large differences in the current record, or records with small differences in the current record. In other words, in some embodiment, transmitting the partial record according to a difference between the current record and the historical record can reduce the data amount of to be transmitted. The method for selecting the target record will be described in detail below in conjunction with the embodiment, and will not be described in detail here.

The historical record can be a record that has been transmitted to the receiving end. As an example, the historical record may be the latest record stored by the receiving end after the previous transmission, or the historical record may also be the record of an earlier version stored by the receiving end. For example, the process of transmitting record from the transmitting end to the receiving end is divided into the first transmission, the first updated transmission...the nth updated transmission, and for the first updated transmission, the historical record may refer to the record of the first transmission. For the nth updated transmission, the historical record may refer to the record stored by the receiving end after the previous n-1 transmissions. Or, in some embodiment, for the nth transmission, the historical record may also refer to the record obtained after the first n-k transmission (k is greater than 1), and the value of k may be negotiated in advance by the transmitting end and the receiving end.

Both the current record and the historical record can comprise a plurality of records. During the record updating process, the main field usually remains unchanged. Therefore, the corresponding record between the current record and the historical record can be determined according to the main field in the current record and the historical record. For example, the record with the same main field in the current record and the historical record is the corresponding record. If the main field is changed, it can be understood that a record in the historical record is deleted, and a new record is added to the current record.

Each record in the current record and the historical record may comprise one or a plurality of data items (the one or plurality of data items may be one or a plurality of data items except the main field). The difference between the current record and the corresponding record in the historical record can be determined based on the difference between the current record and the target data item of the corresponding record in the historical record, or it can be determined based on the ratio of the target data item of the current record and the corresponding record in the historical record, which is not limited in the embodiment of the present disclosure. The target data item may comprise any one or a plurality of data items in the record.

Assuming that the target data item comprises a plurality of data items, and the difference between the current record and the corresponding record in the historical record may be a weighted sum of differences between the plurality of data items of the current record and the corresponding record in the historical record. For example, it can calculate the difference between the current record and the corresponding record in the historical record for each data item in the plurality of data items; then, the plurality of data items can be assigned respective corresponding weighted value according to the importance or other indicators of the data item, and use these weighted values to perform a weighted summation of the plurality of differences corresponding to the plurality of data items as the difference of the corresponding record. In some embodiment, the difference of the corresponding record can be represented by numerical values, so as to facilitate the comparison of the difference of the corresponding record.

The calculation method of the difference between two data items may be determined according to the data type of the data stored in the data items.

For example, if the data type of the data stored in the two data items is numeric, the difference between the two data items may be the difference between the numeric values in the two data items or the absolute value of the difference. The data in the data item is a real number and the data in its corresponding unit can be regarded as numeric data. Before calculating the difference between two numerical data, the user can firstly unify the unit. In the process of calculating the difference between two numerical data, the user can directly calculate the difference between the values themselves regardless of the unit.

For another example, if the data type of the data stored in the two data items is time, the difference between the two data items may be the time difference between the times in the two data items. The time difference can be accurate to any of seconds, minutes, hours, or days.

For another example, if the data type of the data stored in the two data items is a fixed-length character string, the binary representation of the character string in the two data items can be regarded as an integer, and then the above-mentioned difference calculation method of the numerical data can be used to calculate the difference between the two data items.

For another example, if the data type of the data stored in the two data items is a string of variable length, then the target length of the string can be defined firstly. When the length of the string in a data item is shorter than the target length, the user can add binary 0 bytes (0x00) at the end of the string to make it reach the target length; when the length of the string in a data item is longer than the target length, part of the end characters of the string can be discarded to make it reach the target length. Then, the above-mentioned difference calculation method of the fixed-length character string type can be used to calculate the difference between the two data items.

There may be a plurality of methods to select the target record in step S310.

Optionally, as a possible implementation manner, selecting the target record from the current record according to the difference between the current record and the corresponding record in the historical record such that an amount of the target record is less than or equal to a first preset threshold.

The first preset threshold may be the maximum amount of records allowed to be transmitted (for example, 1000). The first preset threshold can be set according to experience or actual conditions. For example, the first preset threshold may be set according to one or more of the following factors: the network status between the transmitting end and the receiving end, the traffic cost required for the transmission process, etc. Optionally, in some embodiment, the value of the first preset threshold can be flexibly adjusted according to actual conditions. If the amount of records in the current record is less than the first preset threshold, all the current records can be transmitted to the receiving end.

Setting the above-mentioned maximum threshold, such that the data amount of that needs to be transmitted at the receiving and transmitting ends is basically stable (maintained below the first preset threshold) regardless of whether the amount of records in the current record is more or less.

Optionally, as another possible implementation manner, selecting the target record from the current record according to the difference between the current record and the corresponding record in the historical record such that a data amount of the target record is less than or equal to a second preset threshold (Or make the data amount of the target record within the preset range).

Different from the previous implementation, this implementation controls the amount of target records to be transmitted from the perspective of the data amount of, such that the data amount of that needs to be transmitted at the receiving and transmitting ends is basically stable (maintained below the second preset threshold)

The above-mentioned first preset threshold and second preset threshold may also be determined according to the update frequency of the current record. For example, according to the update frequency of the current record, the amount of records or the data amount of that can be processed by the user in the two update processes can be calculated so as to determine the values of the first preset threshold and the second preset threshold. For example, if the update frequency of the current record is 15 seconds, and the user can generally process 20 records in 15 seconds, the first preset threshold can be defined as 20; For another example, if the update frequency of the current record is 45 seconds, the user can process records corresponding to 100k data in 45 seconds, so the second preset threshold can be defined as 100k.

The target record can be a record with a large difference between the current record and the corresponding record in the historical record, or a record with a small difference, or a record with a difference that meets other preset conditions, such as a record with a difference fluctuates repeatedly during several consecutive transmissions, to which the embodiment of the present disclosure does not limit. As an example, the target record is a partial record in the current record, and the current record also comprises a remaining record except for the partial record, and a minimum value of a difference between the partial record and the corresponding record in the historical record is greater than or equal to a maximum value of a difference between the remaining record and the corresponding record in the historical record. Compared with the remaining record, the target record is quite different from the corresponding record in the historical record. Therefore, the target record may attract the user's attention more. By transmitting the target record to the receiving end without transmitting the remaining record, such that the data amount of to be transmitted can be reduced, and the transmission quality may not be affected.

The target record may comprise a record in the current record that have a corresponding relationship with the historical record (such record may be referred to as updated record), and can further comprise a newly added record and/or a deleted record relative to the historical record. The newly added record refers to the record included in the current record and not included in the historical record. The deleted record refers to the record not included in the current record but existed in the historical record.

When selecting the target record, he above-mentioned newly added record and/or deleted record can also be taken into account such that even a large amount of newly added records and/or deleted records are included the data amount of to be transmitted at both ends can basically remain stable. For example, the first preset threshold may be the total amount of updated record, newly added record and deleted record. After receiving the updated record in the target record, the receiving end can use the updated record to replace the corresponding record in the historical record. After receiving the newly added record, the receiving end can insert the newly added record into the local record. After receiving the deleted record, the receiving end can delete the corresponding record in the historical record. Updated record or deleted record and corresponding record in the historical record can be searched based on the main field of the record.

Optionally, the deleted record to be transmitted may only comprise the main field to reduce the data amount of to be transmitted.

In order to facilitate the selection of the target record, the current record can be sorted in ascending order or descending order of the difference according to the difference between the current record and the corresponding record of the historical record.

Optionally, in some embodiment, the target record comprises a first record in which a specific data item is deleted, wherein the first record has a same value as the specific data item of the corresponding record in the historical record. The value of the specific data item of the record between the first record and the historical record and the corresponding record in the first record is the same, which means that the specific data item in the first record has not been updated, and the specific data item may not be transmitted, so that the target record can be capable of holding more information. After receiving the first record, if the receiving end determines that the first record lacks a specific data item, it defaults that the value in the specific data item has not been updated, and there is no need to replace it.

Optionally, the transmitting end can use the target record to update the locally saved historical record for use in the next transmission. In this way, if a record in the current record is not selected as the target record, the probability of the record being selected as the target record next time will increase, such that the probability of each record to be transmitted does not deviate too much.

Optionally, before the receiving end transmits the target record, the target record may be compressed (using a general compression method) to reduce the data amount of the target record.

The records to be sent often comprise a large amount of time records. Taking Table 1 as an example, the device number and submission time in the device list constitute the time record of each tested device is as follows:
(2018-05-10 11:21:42, 1568)
(2018-05-10 11:22:01, 1329)
(2018-05-10 11:20:01, 3421)
(2018-05-10 11:20:23, 4560)

Wherein," 1568", "1329", "3421", and "4560" are the device numbers of different devices; "2018-05-10 11:21:42", "2018-05-10 11:22:01", "2018-05-10 11:20:01" and "2018-05-10 11:20:23" are the time corresponding to the above devices (the update time of the running status).

There are a plurality of types of time record, the above is just an example. Common time record usually comprises two basic elements: time and the object identifier of the object to which the time belongs. The meaning of the time and the object identifier in the time record will vary with different applications, which is not limited in the embodiment of the present disclosure. For example, in a monitoring system for device operating status, the time in the time record may refer to the update time of the operating status of the monitored device, and the object identifier in the time record may refer to the device number of the monitored device.

In the above example, "1568" in the time record (2018-05-10 11:22:33, 1568) is the object identifier of the time record, and "2018-05-10 11:22:33" is the time corresponding to this object identifier.

Assuming that the update frequency of the device list is 15 seconds, the server 103 will generate a large amount of time records every day, and the transmission of thousands of time records will occupy a large amount of network resources.

For the time record and other records in the same data set (such as a list), they can be processed separately. Other records can be transmitted directly to the receiving end (or compressed in other ways and transmitted to the receiving end). The time record can be compressed using the method described in Fig.4 to Fig.9 and then transmitted to the receiving end.

As shown in FIG. 4, in step S420, a plurality of original time records are merged into one target time record, wherein different object identifiers in the plurality of original time records correspond to different times, and each object identifier in the target time record corresponds to a same time.

In step S440, the target time record is transmitted to the receiving end.

Since object identifiers in the plurality of original time records correspond to different times, the effect of compressing the plurality of original time records using related arts is limited. The embodiment of the present disclosure is equivalent to modifying the time in partial or all of the original record in the plurality of original records so that the time in the modified time record becomes the same time, and then these modified time records can be merged together to form a target time record. The embodiment of the present disclosure can effectively reduce the consumption of network resources (such as network bandwidth) or data traffic during the transmission of the time record, such that the time record can be quickly and accurately transmitted to the receiving end.

In some embodiment, the original time record may be a single-object time record (that is, the original time record may comprise an object identifier), and the merged target time record may be a multi-object time record (that is, the target time record may comprise a plurality of object identifiers).

The object identifier in the target time record can be the object identifier in the plurality of original time records, or it can be other object identifier that can be indexed to the object identifiers in the plurality of original time records, which is not limited in the embodiment of the present disclosure.

For example, assuming that the plurality of original time records are time records which are updated relative to the historical time record, an object identifier in the target time record is an object identifier in the plurality of original time records or an object identifier in a time record which is not updated relative to the historical time record. For example, when the amount of object identifier in a time record which is not updated relative to the historical time record is greater than the amount of object identifier in a time record which is updated relative to the historical time record, the user can set the object identifier in the target time record as the object identifier in the time record which is not updated relative to the historical time record, Since the amount of the object identifiers in the time records that are updated relative to the historical time record is greater than the amount of object identifiers in the time records that are not updated relative to the historical time record, and in the target time records, recording the object identifiers in the time records that are not updated relative to the historical time record can not only calculate the time records that are updated relative to the historical time record, but also reduce the data amount of the time records. The historical time record referred to here can be either the time record that has been previously obtained or the time record that has been transmitted to the receiving end. For example, the historical time record may be the time record previously transmitted to the receiving end.

There may be a plurality of implementation manners of step S420, which is not limited in the embodiment of the present disclosure. As an example, one time record can be selected from a plurality of original time records, and the time when the time record is selected is used as the reference time, and the time of the remaining original time records in the plurality of original time records are adjusted to the reference time.

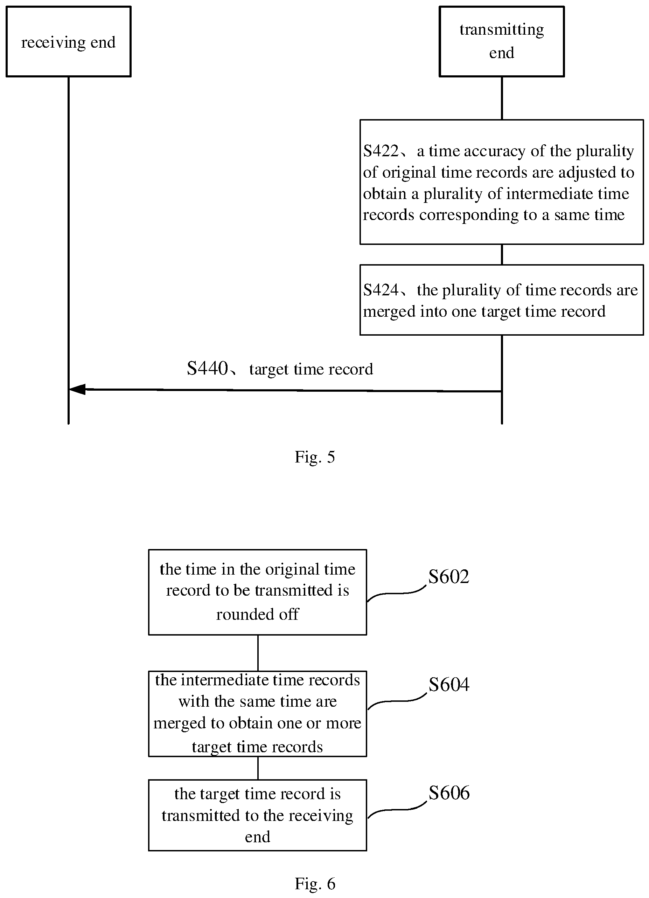

As another example, as shown in FIG.5, steps S422-S424 may be used to merge the plurality of original time records into one target time record.

In step S422, a time accuracy of the plurality of original time records are adjusted to obtain a plurality of intermediate time records corresponding to a same time.

The time accuracy of the original time record can be a first time accuracy and a time accuracy of the intermediate time record is a second time accuracy, and wherein the second time accuracy is less than the first time accuracy.

The embodiment of the present disclosure does not limit the setting manner of the second time accuracy. For example, if the first time accuracy is "1 second", and the second time accuracy can be set to "1 minute" or "30 seconds".

Optionally, in some embodiment, assuming that the original time record is an updated time record according to a certain period, a time length corresponding to the second time accuracy is greater than an update cycle of the original time record.

When the time length corresponding to the second time accuracy is greater than the update cycle of the original time record, the intermediate time record obtained after the accuracy adjustment will either remain unchanged from the time records before updating or be adjusted to the same time, such that most or even all of the intermediate time records can be merged into one target time record, greatly reducing the data amount of the time records.

For example, assuming that the original time record is updated every 40 seconds, if the second time accuracy is greater than 40 seconds (for example, 1 minute), the time of the intermediate time record after adjusting will either remain unchanged compared with the time record before updating or be adjusted to the next minute.

The adjustment can just round off the time in the original time record according to the second time accuracy, or it can just round down but not round up the time in the original time record according to the second time accuracy, or it can just roundup but not round down the time in the original time record according to the second time accuracy, which is not limited in the embodiment of the present disclosure.

In step S424, the plurality of time records are merged into one target time record.

As an example, assuming that the original time record to be processed comprises the following time records:
(2018-05-10 11:21:42, 1568)
(2018-05-10 11:22:01, 1329)
(2018-05-10 11:20:01, 3421)
(2018-05-10 11:20:23, 4560)

The above-mentioned time accuracy of the original time record to be processed is "seconds" (corresponding to the above-mentioned first time accuracy).In order to merge more time records together, rounding off the time accuracy in the original time record such that the time accuracy of all the time records remains to "minutes" (corresponding to the above-mentioned second time accuracy) to obtain the following intermediate time records:
(2018-05-10 11:22:00, 1568)
(2018-05-10 11:22:00, 1329)
(2018-05-10 11:20:00, 3421)
(2018-05-10 11:20:00, 4560)

Among the above intermediate time records, the first two intermediate time records correspond to the same time "2018-05-10 11:22:00", and the last two intermediate time records correspond to the same time "2018-05-10 11:20:00".

Then, the intermediate time records with the same corresponding time can be merged into one target time record to obtain the following two target time records:
(2018-05-10 11:22:00, {1329, 1568});
(2018-05-10 11:20:00, {3421, 4560}).

This disclosure embodiment can reduce the data amount of time records, thereby reducing the consumption of storage resources for time records.

In the scenario of transmitting time record via the network, if the time record is updated in real time, the transmitting end usually firstly transmits the original time record to the receiving end, and this process can be called the first transmission of time record. Then, when the time record is updated, the transmitting end will transmit the updated time record again to the receiving end, and this process can be called the second transmission or updated transmission of time record. The above Fig.2 shows an example of the first and second transmissions of time record, as detailed in the above section.

Regardless of the first transmission or the second transmission of time record, they can be done according to the method as shown in Fig.4. For the second transmission, the transmitting end can transmit in the same method as the first transmission, that is, transmit the complete time record to the receiving end. Alternatively, the transmitting end can transmit the updated time record relative to the historical record without transmitting the time records that are not updated relative to the historical time record. In addition, the transmitting end can transmit one or more of the newly added and deleted time records to the receiving end.

Optionally, the deleted time record transmitted to the receiving end can comprise object identifier but not the time to reduce the data amount of to be transmitted.

The process of the first transmission of time record is illustrated in more details in conjunction with Fig.6. And the step in Fig.6 is executed by the transmitting end.

In step S602, the time in the original time record to be transmitted is rounded off.

For example, assuming that the time error acceptable to the receiving end is one minute, the seconds of the time in the original time record can be rounded to the accuracy level of minutes. Alternatively, if the time error acceptable to the receiving end is 30 seconds, the seconds of the time in the original time record can be rounded to the accuracy level of 30 seconds.

Assuming that the original time records to be transmitted are as follows:
(2018-05-10 11:21:42, 1568)
(2018-05-10 11:22:01, 1329)
(2018-05-10 11:20:01, 3421)
(2018-05-10 11:20:23, 4560)

After the time in the original time record is retained to the accuracy level of minutes, the intermediate time records are obtained as following:
(2018-05-10 11:22:00, 1568)
(2018-05-10 11:22:00, 1329)
(2018-05-10 11:20:00, 3421)
(2018-05-10 11:20:00, 4560)

In step S604, the intermediate time records with the same time are merged to obtain one or more target time records.

For example, assuming the intermediate time records are as follows:
(2018-05-10 11:22:00, 1568)
(2018-05-10 11:22:00, 1329)
(2018-05-10 11:20:00, 3421)
(2018-05-10 11:20:00, 4560)
(2018-05-10 11:30:00, 2356)

Then the target time record obtained after merging is as follows:
(2018-05-10 11:22:00, {1329, 1568})
(2018-05-10 11:20:00, {3421, 4560})
(2018-05-10 11:30:00, 2356)

In step S606, the target time record is transmitted to the receiving end. It can be seen that, compared with the original time record to be transmitted, the data amount of the time record to be transmitted is greatly reduced by transmitting the target time record.

For the receiving end, the target time record comprising a plurality of object identifiers is restored to a single-object time record.

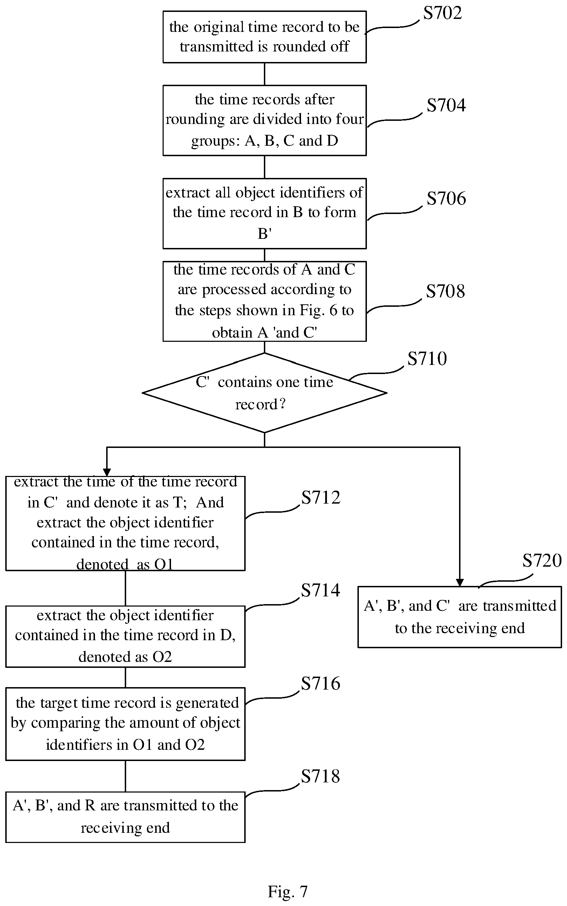

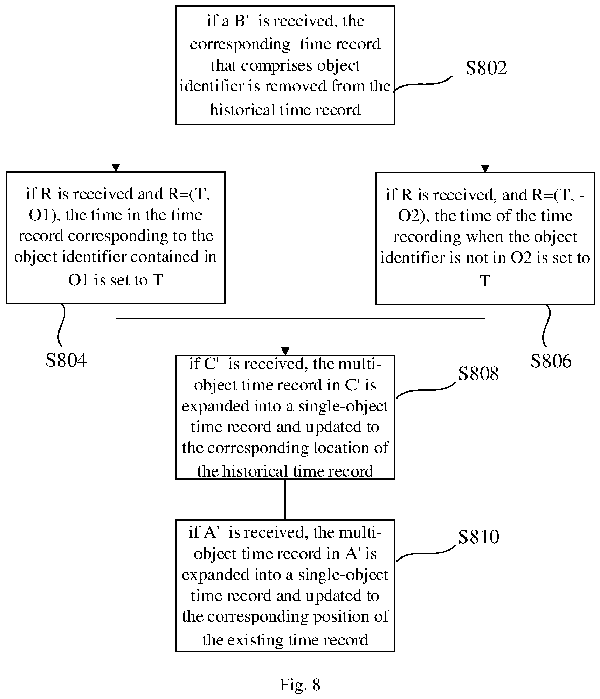

The process of the second transmission of time record is illustrated in more details in conjunction with Fig.7 and Fig.8. Wherein, the process in Fig.7 is executed by the transmitting end, while the process in Fig.8 is executed by the receiving end.

In step S702, the original time record to be transmitted is rounded off.

Assuming that the original time records to be transmitted are as follows:
(2018-05-10 11:23:15, 340)
(2018-05-10 11:23:21, 1568)
(2018-05-10 11:22:57, 1329)
(2018-05-10 11:20:03, 3421)
(2018-05-10 11:23:09, 4560)

The original time records to be transmitted are rounded off such that the time accuracy of the time record can be rounded to the accuracy level of minutes, the following are obtained:
(2018-05-10 11:23:00, 340)
(2018-05-10 11:23:00, 1568)
(2018-05-10 11:23:00, 1329)
(2018-05-10 11:20:00, 3421)
(2018-05-10 11:23:00, 4560).

In step S704, the time records after rounding are divided into four groups: A, B, C and D.
A: the newly added time record relative to the historical time record;
B: the deleted time record relative to the historical time record;
C: the time record that is updated relative to the historical time record;
D: the time record that is not updated relative to the historical time record.

In this embodiment, the historical time record refers to the time record of the previous transmission, which is not limited in the embodiment of the present disclosure. The transmitting end may take any one time record of the previous transmission as the historical time record, as long as it has been negotiated in advance by the transmitting end and the receiving end.

Assuming that the historical time record is as follows:
(2018-05-10 11:22:00, 1568)
(2018-05-10 11:22:00, 1329)
(2018-05-10 11:20:00, 3421)
(2018-05-10 11:20:00, 4560)
(2018-05-10 11:30:00, 2356)

Compared with the historical time record, rounding off the time record through step S702, the following four groups of time records can be obtained:
A=(2018-05-10 11:23:00, 340);
B=(2018-05-10 11:30:00, 2356);
C=(2018-05-10 11:23:00, 1568),(2018-05-10 11:23:00, 1329),(2018-05-10 11:23:00, 4560);
D=(2018-05-10 11:20:00, 3421).

In step S706, extract all object identifiers of the time record in B to form B'. B' can be expressed in this form, for example, "-{b1, b2, b3...}", wherein b1, b2, b3 are object identifiers, and "-" represents deletion. The representation form omits the time transmission of the deleted time record and can reduce the amount of data of time record to be transmitted.

For example, B'=-{2356} can be obtained by processing B=(2018-05-10 11:30:00, 2356) according to step S706.

In step S708, the time records of A and C are processed according to the steps shown in Fig.6 to obtain A 'and C'.

For example, processing A=(2018-05-10 11:23:00, 340) and C=(2018-05-10 11:23:00, 1568), (2018-05-10 11:23:00, 1329), (2018-05-10 11:23:00, 4560) according to step S708, the following can be obtained:
A'= (2018-05-10 11:23:00, 340).
C'=(2018-05-10 11:23:00, {1568, 1329, 4560})

In step S710, if C' contains one time record, then skip to step S712. If C' contains a plurality of time records, then skip to step S720.

For example, C'=(2018-05-10 11:23:00, {1568, 1329, 4560}), which contains one time record, then skip to step S712.

In step S712, extract the time of the time record in C' and denote it as T; and extract the object identifier contained in the time record, denoted as O1.

For example, C'=(2018-05-10 11:23:00, {1568, 1329, 4560}), S712 is executed and then the following result can be obtained:
T = 2018-05-10 11:23:00;
O1 = {1568, 1329, 4560}.

In step S714, extract the object identifier contained in the time record in D, denoted as O2.

For example, D=(2018-05-10 11:20:00,3421), then after step S714, the result is: O2={3421}.

In step S716, the target time record is generated by comparing the amount of object identifiers in O1 and O2. If the amount of object identifiers in O1 is less than the amount of object identifiers in O2, then one target time record R=(T, O1) is generated; Otherwise, the target time record R=(T, -O2) is generated.

For example, compared O2=[3421] with O1={1568, 1329, 4560}, it can be seen that the amount of object identifiers in O2 is less than the amount of object identifiers in O1, then the target time record R=(2018-05-10 11:23:00, -{3421}) can be obtained through step S716.

In step S718, A', B', and R are transmitted to the receiving end.

Therefore, after step S718, the transmitting end transmits the following time record to the receiving end:
A'=(2018-05-10 11:23:00, 340);
B'=-{2356};
R=(2018-05-10 11:23:00, -{3421}).

In step S720, A', B', and C' are transmitted to the receiving end.

Fig.8 shows the processing flow of the receiving end during the second transmission.

In step S802, if a B' is received, the corresponding time record that comprises object identifier is removed from the historical time record.

For example, assuming that the time record from the previous transmission (that is, the historical time record) is:
(2018-05-10 11:22:00, 1568)
(2018-05-10 11:22:00, 1329)
(2018-05-10 11:20:00, 3421)
(2018-05-10 11:20:00, 4560)
(2018-05-10 11:30:00, 2356)

The time record received in this time is as follows:
A'=(2018-05-10 11:23:00, 340);
B'=-{2356};
R=(2018-05-10 11:23:00, -{3421}).

After step S802, (2018-05-10 11:30:00,2356) can be removed from the time record, and the remaining time record is as follows:
(2018-05-10 11:22:00, 1568)
(2018-05-10 11:22:00, 1329)
(2018-05-10 11:20:00, 3421)
(2018-05-10 11:20:00, 4560).

In step S804, if R is received and R=(T, O1), the time in the time record corresponding to the object identifier contained in O1 is set to T.

In step S806, if R is received, and R=(T, -O2), the time of the time recording when the object identifier is not in O2 is set to T.

For example, the format of R=(2018-05-10 11:23:00, -{3421}) conforms to R=(T, -O2). Therefore, step S806 is executed. Set the time of all the time records in the historical time record that the object identifier is not "3421" to "2018-05-10 11:23:00". The results is as follows:
(2018-05-10 11:23:00, 1568)
(2018-05-10 11:23:00, 1329)
(2018-05-10 11:20:00, 3421)
(2018-05-10 11:23:00, 4560)

In step S808, if C' is received, the multi-object time record in C' is expanded into a single-object time record and updated to the corresponding location of the historical time record.

In step S810, if A' is received, the multi-object time record in A' is expanded into A single-object time record and updated to the corresponding position of the existing time record.

For example, A'=(2018-05-10 11:23:00, 340) is added to the current time record to obtain the following result:
(2018-05-10 11:23:00, 1568)
(2018-05-10 11:23:00, 1329)
(2018-05-10 11:20:00, 3421)
(2018-05-10 11:23:00, 4560)
(2018-05-10 11:23:00, 340).

The above method mainly uses "year-month-day-hour: minute: second" to represent time and Arabic numerals to represent object identifiers, which is not limited in the embodiment of the present disclosure.

For example, time can be represented as a numerical representation of time, such as a UNIX timestamp. Alternatively, the user can use binary representations of time and object identifiers.

The embodiment of the present disclosure compresses the data amount of the time record to obtain the target time record. In some embodiment, a general compression algorithm can also be used to compress the target time record again to reduce the data amount of the time record greatly.

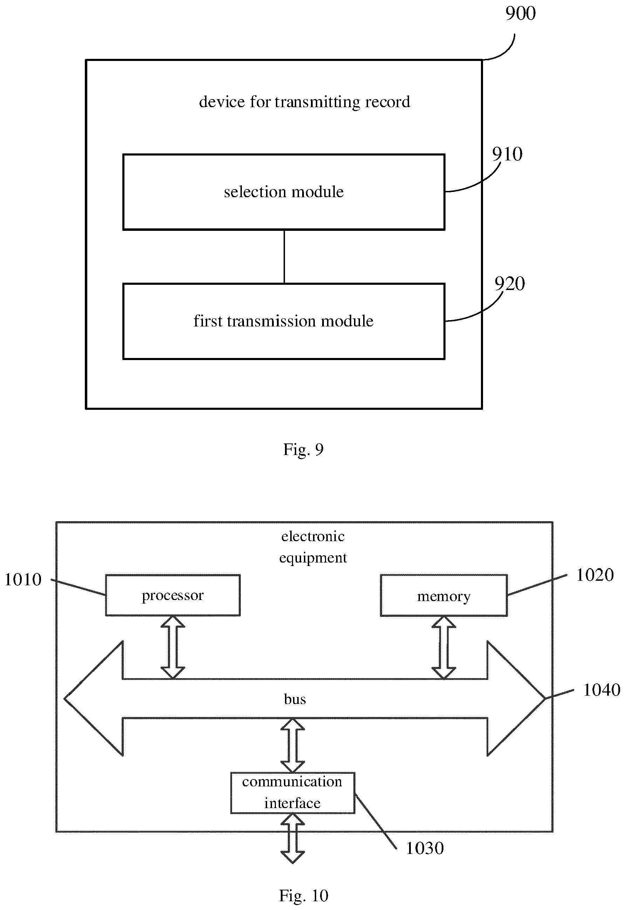

The method embodiment in the present disclosure is described in detail in conjunction with Fig.1 to Fig.8. Now the device embodiment in the present disclosure will be described in detail in conjunction with Fig.9 to Fig.10. The description of method embodiment corresponds to the description of device embodiment, so the parts not described in detail can be referred to the method embodiment above.

The embodiment in the present disclosure also provides a device for transmitting record. As shown in Fig. 9, the device 900 comprises the selection module 910 and the first transmission module 920.

The selection module 910 is configured to select a target record from a current record according to a difference between the current record and a corresponding record in a historical record;

The first transmission module 920 is configured to transmit the target record to a receiving end.

Optionally, the selection module 910 is configured to select the target record from the current record according to the difference between the current record and the corresponding record in the historical record such that an amount of the target record is less than or equal to a first preset threshold.

Optionally, the selection module 910 is configured to select the target record from the current record according to the difference between the current record and the corresponding record in the historical record such that a data amount of the target record is less than or equal to a second preset threshold.

Optionally, the target record comprises a first record in which a specific data item is deleted, wherein the first record has a same value as the specific data item of the corresponding record in the historical record.

Optionally, the target record is a partial record in the current record, and the current record also comprises a remaining record except for the partial record, and a minimum value of difference between the partial record and the corresponding record in the historical record is greater than or equal to a maximum value of a difference between the remaining record and the corresponding record in the historical record.

Optionally, the difference between the current record and the corresponding record in the historical record is determined based on a difference between target data items of the current record and the corresponding record in the historical record.

Optionally, the target data item comprises a plurality of data items, and the difference between the current record and the corresponding record in the historical record is a weighted sum of differences between the plurality of data items of the current record and the corresponding record in the historical record.

Optionally, the target record comprises a newly added record and/or a deleted record relative to the historical record.

Optionally, the deleted record in the target record only comprises a main field.

Optionally, the first transmission module 920 is configured to compress the target record to obtain a compressed data; and transmit the compressed data to the receiving end.

Optionally, the device 900 further comprises: a processing module configured to merge a plurality of original time records into one target time record, wherein different object identifiers in the plurality of original time records correspond to different times, and each object identifier in the target time record corresponds to a same time; a second transmission module configured to transmit the target time record to a receiving end.

Optionally, the processing module comprises: an adjusting module configured to adjust a time accuracy of the plurality of original time records to obtain a plurality of intermediate time records corresponding to a same time, the time accuracy of the original time record is a first time accuracy and a time accuracy of the intermediate time record is a second time accuracy, and wherein the second time accuracy is less than the first time accuracy; a merging module configured to merge the plurality of intermediate time records into the target time record.

Optionally, the adjusting module is configured to round off the time in the plurality of original time records according to the second time accuracy to obtain the plurality of intermediate time records.

Optionally, a time length corresponding to the second time accuracy is greater than an update cycle of the original time record.

Optionally, the plurality of original time records are time records which are updated relative to the historical time record, and an object identifier in the target time record is an object identifier in a time record which is not updated relative to the historical time record, wherein an amount of the object identifiers in the time records which are updated relative to the historical time record is greater than an amount of the object identifier in the time record which is not updated relative to the historical time record.

The embodiment in the present disclosure also provides a computer-readable storage medium with computer-executable instructions stored therein, wherein the computer-executable instructions are arranged to execute the method for transmitting record.

The embodiment in the present disclosure also provides a computer program product, comprising a computer program stored in a computer-readable storage medium, the computer program comprising program instructions, the program instructions, when executed by a computer, causing the computer to execute the method for transmitting record.

The above computer-readable storage medium may be transient computer readable storage medium or non-transient computer readable storage medium.

The embodiment in the present disclosure also provides an electronic equipment, whose structure is shown in Fig. 10, and it comprises: at least one processor 1010, which is taken as an example in Fig.10; and a memory 1020, and can also comprises Communication Interface 1030 and bus 1040. The processor 1010, the communication interface 1030 and the memory 1020 can communicate with each other through the bus 1040. The Communication Interface 1030 can be used for transmitting information. The processor 1010 may invoke logical instructions in memory 1020 to execute the method of transferring record in the above embodiment.

In addition, the logic instructions in the above Memory 1020 can be implemented in the form of software functional units and stored in a computer readable storage medium when sold or used as stand-alone products.

The memory 1020, as a computer readable storage medium, can be used to store software programs, computer executable programs, such as program instructions/modules corresponding to the method in the embodiment of the present disclosed. The processor 1010 performs functional applications and data processing by running software programs, instructions, and modules stored in memory 1020, that is, the method of realizing the method for transmitting record in the above embodiment.

The memory 1020 may include a storage program area and a storage data area, wherein, the storage program area may store the application program required by the operating system and at least one function; The storage data area can store data created according to the use of terminal devices, etc. In addition, the memory 1020 can include high-speed random access memory, and it can also include non-volatile memory.

In some embodiment, the current record mentioned above could be a device list. The device list can be processing devices for "digital credentials". When the digital certificate is related to or embodied as a digital currency, the digital certificate processing device may be a digital currency mining machine and the digital currency may be a cryptocurrency such as Bitcoin.

The technical solutions of the present invention may be embodied by a software product. The software product may be stored in a readable storage medium, and include several instructions used to enable a computer device (for example, a personal computer, a server, or a network device, or the like) to perform all or part of the steps of the method provided by the embodiment of the present invention. The above storage medium may be a non-transient storage medium, for example, a USB flash disk, a mobile hard disk, a read-only memory (ROM), a random access memory (RAM), a magnetic disk, an optical disk, or another medium capable of storing program codes, or may also be a transient storage medium.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. The first element and the second element are both elements, but may not be the same element.

The terminology used herein is for the purpose of describing particular embodiment only and is not intended to be limiting. As used in embodiment and descriptions of claims, the singular forms "a," "an," and "the," are intended to include the plural forms as well, unless the context clearly indicates otherwise. Similarly, the term "and/or" as used in the embodiment of the present invention refers to any and all possible combinations of one or more associated contents in the list. In addition, the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Each aspect, embodiment, implementation, or feature in the described embodiment can be used singly or in any combination. The aspects in the described embodiment may be realized by software, hardware, or a combination of hardware and software. The described embodiment may also be represented by a computer-readable medium that stores computer-readable code including instructions that can be executed by at least one computing device. The computer-readable medium can be associated with any data storage device capable of storing data that can be read by a computer system. Examples of computer-readable media can include read-only memory, random access memory, CD-ROM, HDD, DVD, magnetic tape, and optical data storage devices. The computer readable medium can also be distributed in a computer system connected by a network so that computer readable code can be stored and executed in a distributed manner.

For the above technical description, reference may be made to the drawings, which form a part of the embodiment of the present invention; moreover, through description, the drawings show the manners of implementation of the embodiment in accordance with the description. Although these embodiment are described in such a detailed manner as to enable those skilled in the art to implement these embodiment, these embodiment are non-limiting; thus, other embodiment may be used, and changes may be made without departing from the scope of the described embodiment. For example, the operation sequence described in the flow chart is non-limiting; thus, the illustrations in the flow chart and the sequence of two or more operations described in the flow chart may be changed according to several embodiment. As another example, in several embodiment, the illustrations in the flow chart and one or more operations described in the flow chart are optional or removable. In addition, certain steps or functions may be added to the disclosed embodiment, or more than two steps have their sequence interchanged. All these changes are deemed to fall within the disclosed embodiment and claims.

In addition, terms are used in the above technical description to provide a thorough understanding of the described embodiment. However, excessive details are not needed to implement the described embodiment. Therefore, the above description of the embodiment is presented for explanation and description. The embodiment presented in the above description and the examples disclosed according to these embodiment are provided separately to add context and facilitate understanding the described embodiment. The above description is not intended to be exhaustive or to confine the described embodiment to precise forms of the embodiment of the present invention. Based on the above teachings, several modifications, selective applications, and changes are feasible. In some cases, well-known processing steps are not described in detail to avoid unnecessary influence on the described embodiment.

## Claims

1. A method for transmitting record, comprising:
selecting a target record from a current record according to a difference between the current record and a corresponding record in a historical record;
transmitting the target record to a receiving end.

2. The method according to claim 1, wherein the selecting a target record from a current record according to a difference between the current record and a corresponding record in a historical record comprises:
selecting the target record from the current record according to the difference between the current record and the corresponding record in the historical record such that an amount of the target record is less than or equal to a first preset threshold.

3. The method according to claim 1, wherein the selecting a target record from a current record according to a difference between the current record and a corresponding record in a historical record comprises:
selecting the target record from the current record according to the difference between the current record and the corresponding record in the historical record such that a data amount of the target record is less than or equal to a second preset threshold.

4. The method according to any one of claims 1 to 3, wherein the target record comprises a first record in which a specific data item is deleted, wherein the first record has a same value as the specific data item of the corresponding record in the historical record.

5. The method according to any one of claims 1 to 4, wherein the target record is a partial record in the current record, and the current record also comprises a remaining record except for the partial record, and a minimum value of a difference between the partial record and the corresponding record in the historical record is greater than or equal to a maximum value of a difference between the remaining record and the corresponding record in the historical record.

6. The method according to any one of claims 1 to 5, wherein the difference between the current record and the corresponding record in the historical record is determined based on a difference between target data items of the current record and the corresponding record in the historical record.

7. The method according to claim 6, wherein the target data item comprises a plurality of data items, and the difference between the current record and the corresponding record in the historical record is a weighted sum of differences between the plurality of data items of the current record and the corresponding record in the historical record.

8. The method according to any one of claims 1 to 7, wherein the target record comprises a newly added record and/or a deleted record relative to the historical record.

9. The method according to claim 8, wherein the deleted record in the target record only comprises a main field.

10. The method according to any one of claims 1 to 9, wherein the transmitting the target record to a receiving end comprises:
compressing the target record to obtain compressed data;
transmitting the compressed data to the receiving end.

11. The method according to any one of claims 1 to 10, further comprising:
merging a plurality of original time records into one target time record, wherein different object identifiers in the plurality of original time records correspond to different times, and each object identifier in the target time record corresponds to a same time;
transmitting the target time record to the receiving end.

12. The method according to claim 11, wherein the merging a plurality of original time records into one target time record comprises:
adjusting a time accuracy of the plurality of original time records to obtain a plurality of intermediate time records corresponding to a same time, the time accuracy of the original time record is a first time accuracy and a time accuracy of the intermediate time record is a second time accuracy, and wherein the second time accuracy is less than the first time accuracy;
merging the plurality of intermediate time records into the target time record.

13. The method according to claim 12, wherein the adjusting a time accuracy of the plurality of original time records to obtain a plurality of intermediate time records corresponding to a same time comprises:
rounding off the time in the plurality of original time records according to the second time accuracy to obtain the plurality of intermediate time records.

14. The method according to claim 12 or 13, wherein a time length corresponding to the second time accuracy is greater than a update cycle of the original time record.

15. The method according to any one of claims 11 to 14, wherein the plurality of original time records are time records which are updated relative to the historical time record, and an object identifier in the target time record is an object identifier in a time record which is not updated relative to the historical time record, wherein an amount of the object identifiers in the time records which are updated relative to the historical time record is greater than an amount of the object identifier in the time records which is not updated relative to the historical time record.

16. A device for transmitting record, comprising:
a selection module configured to select a target record from a current record according to a difference between the current record and a corresponding record in a historical record;
a first transmission module configured to transmit the target record to a receiving end.

17. The device according to claim 16, wherein the selection module is configured to select the target record from the current record according to the difference between the current record and the corresponding record in the historical record such that an amount of the target record is less than or equal to a first preset threshold.

18. The device according to claim 16, wherein the selection module is configured to select the target record from the current record according to the difference between the current record and the corresponding record in the historical record such that a data amount of the target record is less than or equal to a second preset threshold.

19. The device according to any one of claims 16 to 18, wherein the target record comprises a first record in which a specific data item is deleted, wherein the first record has a same value as the specific data item of the corresponding record in the historical record.

20. The device according to any one of claims 16 to 19, wherein the target record is a partial record in the current record, and the current record also comprises a remaining record except for the partial record, and a minimum value of difference between the partial record and the corresponding record in the historical record is greater than or equal to a maximum value of a difference between the remaining record and the corresponding record in the historical record.

21. The device according to any one of claims 16 to 20, wherein the difference between the current record and the corresponding record in the historical record is determined based on a difference between target data items of the current record and the corresponding record in the historical record.

22. The device according to claim 21, wherein the target data item comprises a plurality of data items, and the difference between the current record and the corresponding record in the historical record is a weighted sum of differences between the plurality of data items of the current record and the corresponding record in the historical record.

23. The device according to any one of claims 16 to 22, wherein the target record comprises a newly added record and/or a deleted record relative to the historical record.

24. The device according to claim 23, wherein the deleted record in the target record only comprises a main field.

25. The device according to any one of claims 16 to 24, wherein the first transmission module is configured to compress the target record to obtain a compressed data; and transmit the compressed data to the receiving end.

26. The device according to any one of claims 16 to 25, wherein the device further comprising:
a processing module configured to merge a plurality of original time records into one target time record, wherein different object identifiers in the plurality of original time records correspond to different times, and each object identifier in the target time record corresponds to a same time;
a second transmission module configured to transmit the target time record to a receiving end.

27. The device according to claim 26, wherein the processing module comprises:
an adjusting module configured to adjust a time accuracy of the plurality of original time records to obtain a plurality of intermediate time records corresponding to a same time, the time accuracy of the original time record is a first time accuracy and a time accuracy of the intermediate time record is a second time accuracy, and wherein the second time accuracy is less than the first time accuracy;
a merging module configured to merge the plurality of intermediate time records into the target time record.

28. The device according to claim 27, wherein the adjusting module is configured to round off the time in the plurality of original time records according to the second time accuracy to obtain the plurality of intermediate time records.

29. The device according to claim 27 or 28, wherein a time length corresponding to the second time accuracy is greater than an update cycle of the original time record.

30. The device according to any one of claims 26 to 29, wherein the plurality of original time records are time records which are updated relative to the historical time record, and an object identifier in the target time record is an object identifier in a time record which is not updated relative to the historical time record, wherein an amount of the object identifiers in the time records which are updated relative to the historical time record is greater than an amount of the object identifier in the time record which is not updated relative to the historical time record.

31. An electronic equipment, comprising:
at least one processor; and
a memory in communication connection with the at least one processor;
wherein the memory have instructions executable by the at least one processor stored therein, and when being executed by the at least one processor, the instructions cause the at least one processor to execute the method according to any one of claims 1 to 15.

32. A computer-readable storage medium with computer-executable instructions stored therein, wherein the computer-executable instructions are arranged to execute the method according to any one of claims 1 to 15.

33. A computer program product, comprising a computer program stored in a computer-readable storage medium, the computer program comprising program instructions, the program instructions, when executed by a computer, causing the computer to execute the method according to any one of claims 1 to 15.
